# EUROPEAN PATENT SPECIFICATION

(11) **EP 3 820 082 B1**
(45) Date of publication and mention of the grant of the patent: **22.10.2025**
(21) Application number: 19207696.6
(22) Date of filing: 07.11.2019
(51) Int. Cl.: H04L 43/028

(54) **SYSTEM FOR ANALYZING DATA TRAFFIC AS WELL AS METHOD FOR ANALYZING DATA TRAFFIC**
SYSTEM ZUR ANALYSE VON DATENVERKEHR SOWIE VERFAHREN ZUR ANALYSE VON DATENVERKEHR
SYSTÈME D'ANALYSE DE TRAFIC DE DONNÉES AINSI QU'UN PROCÉDÉ D'ANALYSE DE TRAFIC DE DONNÉES

(43) Date of publication of application: 12.05.2021
(73) Proprietor: Rohde & Schwarz GmbH & Co. KG, 81671 München (DE)
(72) Inventor: Urban, Stefan, 81671 München (DE)
(74) Representative: Novagraaf Group

(56) References cited:
- EP-A1- 2 933 955
- US-B1- 8 756 337
- "Network Functions Virtualisation (NFV); Reliability; Report on Scalable Architectures for Reliability Management", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV REL, no. V1.1.1, 30 September 2015 (2015-09-30), XP014265196
- "Network Functions Virtualisation (NFV); Virtual Network Functions Architecture", vol. ISG - NFV, no. V-SWA 001 V1.1.1, 30 September 2017 (2017-09-30), pages 1 - 93, XP014311806, Retrieved from the Internet <URL:docbox.etsi.org\ISG\NFV\Open\Publications_pdf\Specs-Reports\NFV-SWA 001v1.1.1 - GS - Virtual Network Function Architecture.pdf> [retrieved on 20170901]

## Description

The invention concerns a system for analyzing data traffic and a method for analyzing data traffic.

Analyzing data traffic using deep packet inspection techniques need large amounts of computing resources in order to perform the analysis in real-time or near real-time.

EP 2 933 955 A1 discloses a co-processor for deep packet inspection. The processor comprises a distributing unit, several processor cores, a sub-coprocessor and a report processing module.

US 8 756 337 B1 shows a deep packet inspection engine having several data analyzing units and a packet processing priority identifier for the specific deep packet inspection engine. Several deep packet inspection engines 108 may be used in parallel, which are then fed by a load balancer 104.

"Network Functions Virtualisation (NFV); Reliability, Report on Scalable Architectures for Reliability Management", Group Specification, European Telecommunications Standards Institute (ETS), 650, vol. NFV REL, no. V1.1., 1 September 2015, XP014265196 ("D3" in the following) describes - on the level of virtual machines on a physical virtualization server - a method for achieving high availability and reliability of a network function, such as deep packet inspection, running on virtual machine.

The amount of data traffic in the channel to be analyzed is not constant and varies over time. In order to perform data analysis reliably, surplus resources have to be provided that are able to analyze the data traffic even in peak times. However, providing surplus resources is expensive.

For this purpose, a system for analyzing data traffic is provided comprising at least two data analyzing units and a distribution unit, each of the data analyzing units comprising a data input and a result output. Each of the data analyzing units is connected via its respective data input to the distribution unit and the data analyzing units are configured to perform data analysis using a deep packet inspection technique as well as to transmit and receive an analysis status of data analysis to and from the distribution unit, respectively. The distribution unit is configured to store information about the analysis status and/or the analysis status received from one of the data analyzing units as well as to send the stored information about the analysis status and/or the stored analysis status to one of the data analyzing units, wherein the distribution unit is further configured to redistribute data analysis work between the data analysis units without losing the state of the analysis and any previously performed analysis work by providing one of the data analysis units with the latest stored analysis status received from one of the data analysis units. Thus, the workload of the data analyzing units may be held at an optimum, reducing idle data analyzing units and thus saving resources.

The term "deep packet inspection technique" refers to an analysis of the header part of a data packet as well as the data part of the data packet. Deep packet inspection techniques are per se known.

A timestamp of the analysis status may be present in information about the analysis status.

In an aspect, the analysis status comprises the state of the analysis, the status of parts of the data, in particular of parts of the data packet, and/or a timestamp of the latest change of the analysis status ensuring a complete set of information about the analysis.

The status of already analyzed data may include "analyzed", "not yet analyzed" and "results send to result unit".

To increase flexibility further, the distribution unit may be configured to send the stored information about the analysis status and/or the stored analysis status received from one of the data analyzing units to the same one of the data analyzing units and/or a different one of the data analyzing units.

The distribution unit may send the stored information and/or the stored analysis status immediately after reception of it or at a later point in time.

In an embodiment, each of the data analyzing units is configured to perform data analysis based on the information about the analysis status and/or the stored analysis status received from the distribution unit, in particular to resume data analysis based on the information about the analysis status and/or the stored analysis status received from the distribution unit. This way, seamless and non-redundant analysis of the data is ensured.

In order to effectively balance the workload, the distribution unit may be configured to distribute data packets of data traffic to be analyzed, in particular IP packets of IP data traffic to be analyzed, to the data analyzing units, in particular wherein the analysis status comprises information about the data packet being analyzed by the respective data analyzing unit.

For example, the distribution unit is configured to send to one of the data analyzing units a data packet to be analyzed together with the stored information about the analysis status and/or the stored analysis status to one of the data analyzing units, in particular the data packet sent being the data packet identified in the analysis status. Hence, the data analyzing unit receives all necessary information but also not more than necessary to reduce the amount of resources needed.

The respective data analyzing unit is, for example, configured to resume data analysis of the respective data packet, in particular at the point where the previous data analysis unit has left off.

In an embodiment, the system comprises a result unit connected to the result output of each of the data analyzing units and is configured to receive the analysis results of the data analysis, in particular wherein the result unit comprises a user interface module for presenting the analysis results. As such, the results of the data analyzing units may be collectively processed.

To facilitate the design of the system, the distribution unit may be a server for the data analyzing units and the data analyzing units are clients of the distribution unit.

In an aspect of the invention, the distribution unit is configured to generate new data analyzing units and/or to terminate existing data analyzing units, in particular wherein the generation and/or termination of a data analyzing unit is triggered by a user input and/or load data from existing data analyzing units. Thus, the workload of the data analyzing units may be controlled effectively.

In an embodiment, the system comprises a data storage accessible by the distribution unit and in which the information about the analysis status and/or the analysis status is stored so that analysis statuses are saved for further use.

Further, data packets may be stored in the data storage.

In another aspect, the system comprises a data storage cleaning unit being configured to delete information about the analysis status and/or the analysis status in the data storage based on user input, a predefined characteristic of the information about the analysis status, a predefined characteristic of the analysis status and/or a predefined time, in particular a predefined time with regard to the timestamp. This way, the resources needed for the data storage may be effectively be reduced.

The system may comprise a network interface being connected to the distribution unit for receiving the data traffic to be analyzed.

Further, for above purpose, a method for analyzing data traffic is provided using a system for analyzing data traffic, in particular a system as described above. The method comprising the following steps:
a) analyzing data using a deep packet inspection technique by one of at least two data analyzing units of the system,
b) transmitting an analysis status of data analysis from the one of the data analyzing units to a distribution unit of the system via a data input of the data analyzing unit,
c) storing information about the analysis status and/or the analysis status received from the one of the data analyzing units by the distribution unit, and
d) sending the stored information about the analysis status and/or the stored analysis status from the distribution unit to the one or another one of the data analyzing units, wherein the distribution unit is further configured to redistribute data analysis work between the data analysis units without losing the state of the analysis and any previously performed analysis work by providing one of the data analysis units with the latest stored analysis status received from one of the data analysis units.

The features and advantages discussed with respect to the system also apply to the method and vice versa. In particular, the method may comprise steps corresponding to the tasks that the components of the system are configured to perform.

For example, the respective one of the data analyzing unit receives the information about the analysis status and/or the analysis status sent by the distribution unit and performs data analysis based on the information about the analysis status and/or the stored analysis status received from the distribution unit, in particular resuming data analysis based on the information about the analysis status and/or the stored analysis status received from the distribution unit, ensuring seamless and non-redundant analysis of the data.

In an aspect, the distribution unit distributes data packets of data traffic to be analyzed, in particular IP packets of IP data traffic to be analyzed, to the data analyzing units, in particular wherein the distribution unit sends to one of the data analyzing units a data packet to be analyzed together with the stored information about the analysis status and/or the stored analysis status related to the data packet. Thus, the workload of the data analyzing units can be balanced effectively.

Further features and advantages will be apparent from the following description as well as the accompanying drawings, to which reference is made. In the drawings:
- Figure 1 shows a system according to the invention schematically, and
- Figure 2 shows a flow-chart of a method according to the invention.

The present invention is defined in the appended independent claims to which reference should be made. Advantageous features are set out in the appended dependent claims.

Lists having a plurality of alternatives connected by "and/or", for example "A" B and/or C" are to be understood to disclose an arbitrary combination of the alternatives, i.e. "A and/or B and/or C".

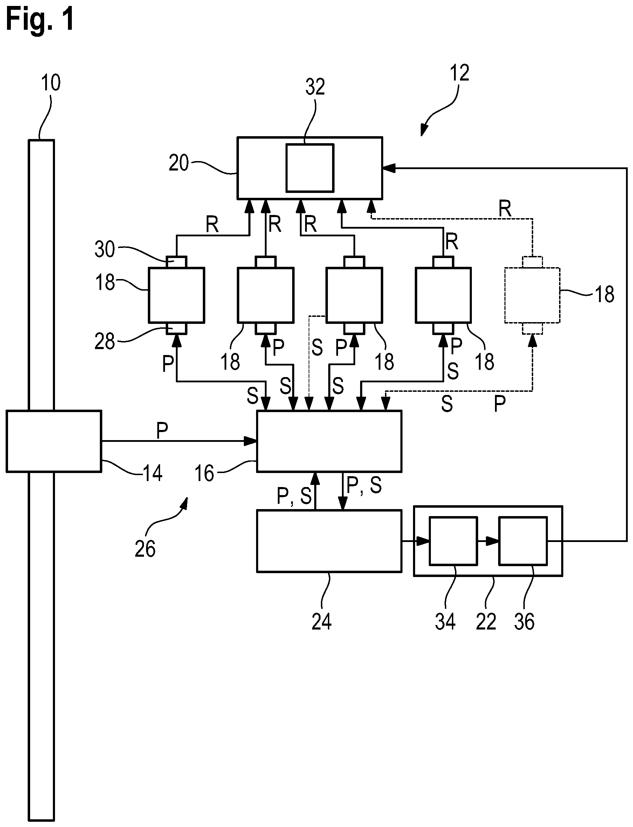

In Figure 1, a data channel 10 of a data network and a system 12 for analyzing the data traffic in the data channel 10 is shown schematically.

The data channel 10 may be part of a data network, in particular of the Internet or a local area network.

The data traffic within the network and thus the data channel 10 follow the Internet Protocol (IP), for example. Of course, the data traffic within the network and the data channel 10 may also follow other communication protocols.

The data traffic within the data channel 10 comprises data packets P of data traffic, in particular IP packets of the IP data traffic.

The data packets P have a header part and a data part according to the protocols used. Thus, the structure of the data packets P is per se known.

The system 12 comprises a network interface 14, a distribution unit 16, several data analyzing units 18, a result unit 20, a data storage cleaning unit 22 and a data storage 24.

The distribution unit 16, the data analyzing units 18, the result unit 20 and the data storage cleaning unit 22 may be part of a single control unit 26 of the system 12.

The data analyzing units 18 may be run in parallel, for example on different processors, processor cores or even different hardware servers of a cloud infrastructure.

The data storage 24 is a hardware data storage, which may also be a data storage on a single server or distributed over a plurality of servers forming a cloud infrastructure.

The network interface 14 may also be a hardware component.

The network interface 14 is connected to the data channel 10 and the distribution unit 16. It is configured to receive data packets P of the data traffic in the data channel 10 and to transmit the data packets P to the distribution unit 16.

The distribution unit 16 is connected to the data storage 24 for storing data in and receiving data from the data storage 24, for example data packets P.

The data analyzing units 18 comprise a data input 28 and a result output 30. In the shown embodiment, five distribution units 16 are shown, one of which is shown in dashed lines. It is of course conceivable that any other number of data analyzing units 18 is present in the system 12.

Each of the data analyzing units 18 is connected to the distribution unit 16 via their respective data input 28. The connection to the distribution unit 16 via the data input 28 may also be used to transmit data from the data analyzing units 18 to the distribution unit 16.

The data analyzing units 18 are configured to perform data analysis using a deep packet inspection technique, meaning that the data analyzing units 18 perform an analysis not only of the header part of a data packet P but also of the data part of the respective data packet P.

With the result output 30 each data analyzing unit 18 is connected to the result unit 20.

The result unit 20 comprises a user interface module 32 being configured to display or otherwise present results received from the data analyzing units 18 to a user.

In the shown embodiment, the data storage cleaning unit 22 comprises a garbage collector 34 and a cleanup module 36 connected to the garbage collector. The garbage collector 34 and optionally also the cleanup module 36 are connected to the data storage 24.

Further, the cleanup module 36 is connected to the result unit 20 to transmit information about its work to the result unit 20.

The distribution unit 16 is also connected to the data storage 24 and has access to it.

In the shown embodiment, the distribution unit 16 is acting as a server for the data analyzing units 18 and the data analyzing units 18 in turn are clients of the distribution unit 16.

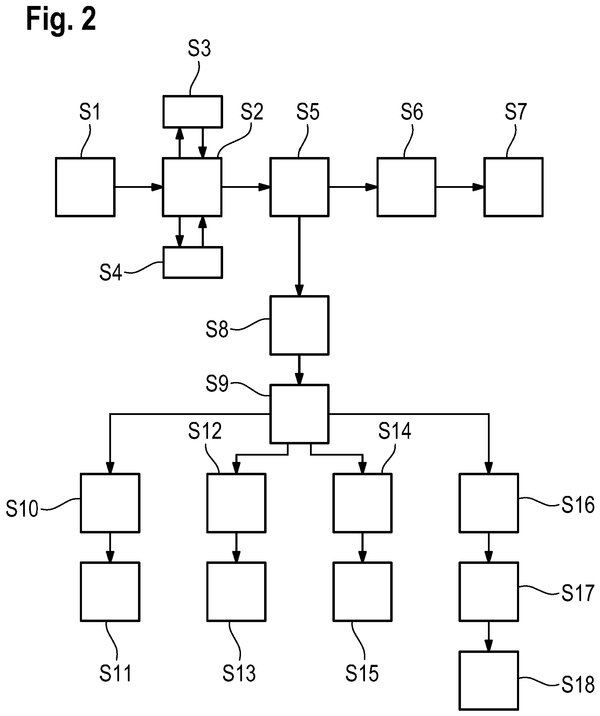

For analyzing the data traffic in the data channel 10, the system 12, in particular the distribution unit 16, performs the method shown in Figure 2.

It is obvious that all of the mentioned components performing a specific step are configured to perform said step. Hence, an explicit mention of the fact that the components are configured to do so has been omitted for simplicity.

In the first step S1, the network interface 14 picks up the data packets P of the data traffic in the data channel 10 and transmits the data packets P to the distribution unit 16.

In particular, the network interface 14 transmits all data packets P transmitted via the data channel 10 to the distribution unit 16.

In the next step S2, the distribution unit 16 distributes the data packets P of the data traffic to the data analyzing units 18.

The data packets P are distributed by the distribution unit 16 among the data analyzing units 18 according to a predefined scheme, for example a scheme to balance the workload of the data analyzing units 18.

In other words, the distribution unit 16 assigns a data packet P to a data analyzing unit 18 having the capacity to process the specific data packet P.

Each data packet P is assigned to a specific one of the data analyzing units 18 and sent to this particular data analyzing unit 18. In other words, the data packet P is not sent to data analyzing units 18 that have not been assigned to this data packet P.

Further, the distribution unit 16 may generate a new analyzing unit 18 - illustrated with dashed lines in Figure 1 - in order to reduce the workload of the already existing analyzing unit 18. Thus, if a data packet P received from the network interface 14 cannot be assigned to any of the already existing data analyzing units 18 due to the workload of the existing data analyzing units 18, the distribution unit may generate a new data analyzing unit 18 (step S3).

Likewise, the distribution unit 16 may terminate an existing data analyzing unit 18, if the workload, i.e. the number of incoming data packets P from the network interface 14, may be handled by the remaining data analyzing units (step S4).

Generation of a new data analyzing unit 18 and/or termination of existing data analyzing units 18 may be invoked by a user input to the system 12, or load data, i.e. information about the workload, of the existing data analyzing units 18.

The load data may be transmitted from each data analyzing unit 18 to the distribution unit 16 in the analysis status or separately.

In the next step S5, each of the data analyzing units 18 performs a data analysis using the deep packet inspection technique on the data packet P.

At the same time, each data analyzing unit 18 records an analysis status S of the data analysis.

The analysis status S comprises the state of the analysis, e.g. analysis steps that have already been performed; the status of already analyzed data of the data packet P, e.g. whether specific parts have already been subject to the analysis or not; the current workload of the analyzing unit 18 and/or also a timestamp of the latest change to the analysis status S.

Of course, the analysis status S also identifies the data packet P it is associated with.

The analysis status S comprises information documenting the exact progress of the data analysis that has already been performed on the respective data packet P.

During and after the analysis of the data packet P, the analysis unit transmits the results R of the data analysis to the result unit 20 via the result output 30.

In particular, the analysis status S comprises information about which results R of which part of the data packet P have already been transmitted to the result unit 20.

The results R of the data analysis may be transmitted continuously to the result unit 20 as they emerge or for each data packet P as a whole (step S6).

The result unit 20 receives the analysis results from each of the data analyzing units 18. The result unit 20 may present the analysis results R to the user using the user interface module 32 (step S7).

The result unit 20 may perform further processing steps on the analysis results R, for example grouping the analysis results R received from different data analyzing units 18 to improve the presentation.

Simultaneously during the analysis, each data analyzing unit 18 transmits the current analysis status S to the distribution unit 16 (step S8).

This may be done via the data input 28 or via another connection with the distribution unit 16 (shown in Figure 1 in one occasion in a dashed line).

Thus, the distribution unit 16 receives information about the current progress in the data analysis of the data packet P assigned to the respective data analyzing unit 18.

The distribution unit 16 stores, in step S9, the analysis status S received from the data analyzing units 18 in the data storage 24.

In addition or in the alternative, the distribution unit 16 stores information about the analysis status S in the data storage 24, for example a timestamp of the analysis status S.

Further, data packets P are stored in the data storage 24 by the distribution unit 16 or the network interface 14 directly.

In the next step, the distribution unit 16 uses the received analysis status S to control the distribution of data packets P to the data analyzing units 18.

For example, if a data analyzing unit 18 terminates and restarts unexpectedly, the distribution unit 16 may provide this restarted data analyzing unit 18 with the latest analysis status received from this data analyzing unit 18 and the data packet P identified in the analysis status, i.e. the data packet P associated with the analysis status S (step S10).

Thus, the distribution unit 16 has sent the stored information and/or the stored analysis status S at a point in time, when it has been informed about the termination and restart of the data analyzing unit 18. This point in time is not immediately after reception of the analysis status S.

Thus, in the next step S11, the restarted data analyzing unit 18 receives the analysis status S and the data packet P from the distribution unit 16 and performs data analysis using the analysis status S and the respective data packet P. With the information in the analysis status S, the restarted data analyzing unit 18 may resume the data analysis right from the point at which it unexpectedly terminated.

Of course, in all of the cases mentioned, the distribution unit 16 may also transmit the information about the analysis status S to the data analyzing units 18, which is then also taken into account by the respective data analyzing unit 18.

In the case that the distribution unit 16 terminates a data analyzing unit 18 (step S12), the distribution unit 16 sends the most current stored information about the analysis status and/or the most current stored analysis status from the data analyzing unit 18 being terminated to another one of the existing data analyzing units 18, which shall take the workload of the data analyzing unit 18 being terminated.

The distribution unit 16 also sends the data packet P identified in this most current analysis status S to the data analyzing unit 18, which takes over from the data analyzing unit 18 being terminated. This may happen immediately after reception of the analysis status S from the data analyzing unit 18 being terminated.

The data analyzing unit 18 being terminated may then be terminated.

In the next step S13, the data analyzing unit 18, which takes over the workload of the data analyzing unit 18 that has been terminated, resumes the data analysis of the respective data packet P at the point where the data analyzing unit 18 that has been terminated has left off.

Likewise, the distribution unit 16 may generate a new data analyzing unit 18 (step S14), providing it with the analysis status S, the information about the analysis status S and the data packet P identified in the analysis status S from a different data analyzing unit 18 with a high workload, in order to reduce the workload of the specific data analyzing unit 18.

In step S15, which resembles step S13, the newly generated data analyzing unit 18 then resumes data analysis of the data packet P according to the analysis status S.

Thus, a very resource-efficient and flexible system for deep packet inspection is realized that scales horizontally without losing the state of an analysis, when moving, generating or terminating data analyzing units 18.

Further, to improve performance, the garbage collector 34 scans the data storage 24 regularly to identify data traffic, in particular IP-flows, that do not receive new data packets P, for example if the connection of this IP-flow has timed out.

This may be done using the timestamp or any other predefined characteristic of the information about the analysis status S or a predefined characteristic of the analysis status S itself or after lapse of a predefined time from the point in time mentioned in the timestamp (step S16).

Information on the IP-flow is then transferred to the cleanup module 36, which terminates the IP-flow and deletes the respective analysis statuses S, information about it and data packets P to free up storage capacity (step S17).

The cleanup module 36 may also report results of its work to the result unit 20 for presentation to a user (step S18).

## Claims

1. System for analyzing data traffic comprising at least two data analyzing units (18) and a distribution unit (16),
each of the data analyzing units (18) comprising a data input (28) and a result output (30),
each of the data analyzing units (18) is connected via its respective data input (28) to the distribution unit (16), and the data analyzing units (18) are configured to perform data analysis using a deep packet inspection technique,
wherein the data analyzing units (18) are configured to transmit and receive an analysis status (S) of data analysis to and from the distribution unit (16), respectively,
wherein the distribution unit (16) is configured to store information about the analysis status (S) and/or the analysis status (S) received from one of the data analyzing units (18) as well as to send the stored information about the analysis status (S) and/or the stored analysis status (S) to one of the data analyzing units (18), and
wherein the distribution unit (16) is further configured to redistribute data analysis work between the data analysis units (18) without losing the state of the analysis and any previously performed analysis work by providing one of the data analysis units (18) with the latest stored analysis status (S) received from one of the data analysis units (18).

2. System according to claim 1, **characterized in that** the analysis status (S) comprises the state of the analysis, the status of parts of the data, in particular of parts of the data packet, and/or a timestamp of the latest change of the analysis status (S).

3. System according to claim 1 or 2, **characterized in that** the distribution unit (16) is configured to send the stored information about the analysis status (S) and/or the stored analysis status (S) received from one of the data analyzing units (18) to the same one of the data analyzing units (18) and/or a different one of the data analyzing units (18).

4. System according to any one of the preceding claims, **characterized in that** each of the data analyzing units (18) is configured to perform data analysis based on the information about the analysis status (S) and/or the stored analysis status (S) received from the distribution unit (16), in particular to resume data analysis based on the information about the analysis status (S) and/or the stored analysis status (S) received from the distribution unit (16).

5. System according to any one of the preceding claims, **characterized in that** the distribution unit (16) is configured to distribute data packets (P) of data traffic to be analyzed, in particular IP packets of IP data traffic to be analyzed, to the data analyzing units (18), in particular wherein the analysis status (S) comprises information about the data packet (P) being analyzed by the respective data analyzing unit (18).

6. System according to claim 5, **characterized in that** the distribution unit (16) is configured to send to one of the data analyzing units (18) a data packet (P) to be analyzed together with the stored information about the analysis status (S) and/or the stored analysis status (S) to one of the data analyzing units (18), in particular the data packet (P) sent being the data packet (P) identified in the analysis status (S).

7. System according to any one of the preceding claims, **characterized in that** the system (12) comprises a result unit (20) connected to the result output (30) of each of the data analyzing units (18) and configured to receive the analysis results (R) of the data analysis, in particular wherein the result unit (20) comprises a user interface module (32) for presenting the analysis results (R).

8. System according to any one of the preceding claims, **characterized in that** the distribution unit (16) is a server for the data analyzing units (18) and the data analyzing units (18) are clients of the distribution unit (16).

9. System according to any one of the preceding claims, **characterized in that** the distribution unit (16) is configured to generate new data analyzing units (18) and/or to terminate existing data analyzing units (18), in particular wherein the generation and/or termination of a data analyzing unit (18) is triggered by a user input and/or load data from existing data analyzing units (18).

10. System according to any one of the preceding claims, **characterized in that** the system (12) comprises a data storage (24) accessible by the distribution unit (16) and in which the information about the analysis status (S) and/or the analysis status (S) is stored.

11. System according to claim 10, **characterized in that** the system (12) comprises a data storage cleaning unit (22) being configured to delete information about the analysis status (S) and/or the analysis status (S) in the data storage (24) based on user input, a predefined characteristic of the information about the analysis status (S), a predefined characteristic of the analysis status (S) and/or a predefined time, in particular a predefined time with regard to the timestamp.

12. System according to any one of the preceding claims, **characterized in that** the system (12) comprises a network interface (14) being connected to the distribution unit (16).

13. Method for analyzing data traffic using a system (12) for analyzing data traffic, in particular a system (12) according to any one of the preceding claims, comprising the following steps:
a) analyzing data using a deep packet inspection technique by one of at least two data analyzing units (18) of the system (12),
b) transmitting an analysis status (S) of data analysis from the one of the data analyzing units (18) to a distribution unit (16) of the system (12) via a data input (28) of the data analyzing unit (18),
c) storing information about the analysis status (S) and/or the analysis status (S) received from the one of the data analyzing units (18) by the distribution unit (16), and
d) sending the stored information about the analysis status (S) and/or the stored analysis status (S) from the distribution unit (16) to one of the data analyzing units (18), wherein the distribution unit (16) redistributes data analysis work between the data analysis units (18) without losing the state of the analysis and any previously performed analysis work by providing one of the data analysis units (18) with the latest stored analysis status (S) received from one of the data analysis units (18).

14. Method according to claim 13, wherein the respective data analyzing unit (18) receives the information about the analysis status (S) and/or the analysis status (S) sent by the distribution unit (16) and performs data analysis based on the information about the analysis status (S) and/or the stored analysis status (S) received from the distribution unit (16), in particular resuming data analysis based on the information about the analysis status (S) and/or the stored analysis status (S) received from the distribution unit (16).

15. Method according to claim 13 or 14, wherein the distribution unit distributes data packets (P) of data traffic to be analyzed, in particular IP packets of IP data traffic to be analyzed, to the data analyzing units (18), in particular wherein the distribution unit (16) sends to one of the data analyzing units (18) a data packet (P) to be analyzed together with the stored information about the analysis status (S) and/or the stored analysis status (S) related to the data packet (P).

## Patentansprüche

1. System zum Analysieren von Datenverkehr, umfassend mindestens zwei Datenanalyseeinheiten (18) und eine Verteilungseinheit (16),
jede der Datenanalyseeinheiten (18) umfassend einen Dateneingang (28) und einen Ergebnisausgang (30),
wobei jede der Datenanalyseeinheiten (18) über ihren jeweiligen Dateneingang (28) mit der Verteilungseinheit (16) verbunden ist, und die Datenanalyseeinheiten (18) konfiguriert sind, um eine Datenanalyse unter Verwendung einer Deep-Packet-Inspection-Technik durchzuführen, wobei die Datenanalyseeinheiten (18) konfiguriert sind, um einen Analysestatus (S) der Datenanalyse an die Verteilungseinheit (16) zu übertragen und von dieser zu empfangen,
wobei die Verteilungseinheit (16) konfiguriert ist, um Informationen über den Analysestatus (S) und/oder den Analysestatus (S), der von einer der Datenanalyseeinheiten (18) empfangen wird, zu speichern, sowie um die gespeicherten Informationen über den Analysestatus (S) und/oder den gespeicherten Analysestatus (S) an eine der Datenanalyseeinheiten (18) zu senden, und
wobei die Verteilungseinheit (16) ferner konfiguriert ist, um Datenanalysearbeit zwischen den Datenanalyseeinheiten (18) durch Versehen einer der Datenanalyseeinheiten (18) mit dem neuesten gespeicherten Analysestatus (S), der von einer der Datenanalyseeinheiten (18) empfangen wird, neu zu verteilen, ohne den Status der Analyse und beliebige zuvor durchgeführte Analysearbeit zu verlieren.

2. System nach Anspruch 1, **dadurch gekennzeichnet, dass** der Analysestatus (S) den Stand der Analyse, den Status von Teilen der Daten, insbesondere von Teilen des Datenpakets, und/oder einen Zeitstempel der letzten Änderung des Analysestatus (S) umfasst.

3. System nach Anspruch 1 oder 2, **dadurch gekennzeichnet, dass** die Verteilereinheit (16) konfiguriert ist, um die gespeicherten Informationen über den Analysestatus (S) und/oder den gespeicherten Analysestatus (S), der von einer der Datenanalyseeinheiten (18) empfangen wird, an dieselbe der Datenanalyseeinheiten (18) und/oder eine andere der Datenanalyseeinheiten (18) zu senden.

4. System nach einem der vorstehenden Ansprüche,
**dadurch gekennzeichnet, dass** jede der Datenanalyseeinheiten (18) konfiguriert ist, um basierend auf den Informationen über den Analysestatus (S) und/oder dem gespeicherten Analysestatus (S), der von der Verteilungseinheit (16) empfangen wird, eine Datenanalyse durchzuführen, insbesondere um basierend auf den Informationen über den Analysestatus (S) und/oder dem gespeicherten Analysestatus (S), der von der Verteilungseinheit (16) empfangen wird, die Datenanalyse wieder aufzunehmen.

5. System nach einem der vorstehenden Ansprüche,
**dadurch gekennzeichnet, dass** die Verteilungseinheit (16) konfiguriert ist, um Datenpakete (P) eines zu analysierenden Datenverkehrs, insbesondere IP-Pakete eines zu analysierenden IP-Datenverkehrs, an die Datenanalyseeinheiten (18) zu verteilen, insbesondere wobei der Analysestatus (S) Informationen über das Datenpaket (P) umfasst, das durch die jeweilige Datenanalyseeinheit (18) analysiert wird.

6. System nach Anspruch 5, **dadurch gekennzeichnet, dass** die Verteilereinheit (16) konfiguriert ist, um an eine der Datenanalyseeinheiten (18) ein zu analysierendes Datenpaket (P) zusammen mit den gespeicherten Informationen über den Analysestatus (S) und/oder dem gespeicherten Analysestatus (S) an eine der Datenanalyseeinheiten (18) zu senden, insbesondere wobei das gesendete Datenpaket (P) das Datenpaket (P) ist, das in dem Analysestatus (S) identifiziert wird.

7. System nach einem der vorstehenden Ansprüche,
**dadurch gekennzeichnet, dass** das System (12) eine Ergebniseinheit (20) umfasst, die mit dem Ergebnisausgang (30) jeder der Datenanalyseeinheiten (18) verbunden ist und konfiguriert ist, um die Analyseergebnisse (R) der Datenanalyse zu empfangen, wobei insbesondere die Ergebniseinheit (20) ein Benutzerschnittstellenmodul (32) zum Darstellen der Analyseergebnisse (R) umfasst.

8. System nach einem der vorstehenden Ansprüche,
**dadurch gekennzeichnet, dass** die Verteilungseinheit (16) ein Server für die Datenanalyseeinheiten (18) ist und die Datenanalyseeinheiten (18) Clients der Verteilungseinheit (16) sind.

9. System nach einem der vorstehenden Ansprüche,
**dadurch gekennzeichnet, dass** die Verteilungseinheit (16) konfiguriert ist, um neue Datenanalyseeinheiten (18) zu erzeugen und/oder um bestehende Datenanalyseeinheiten (18) zu beenden, insbesondere wobei die Erzeugung und/oder Beendigung einer Datenanalyseeinheit (18) durch eine Benutzereingabe und/oder Lastdaten aus bestehenden Datenanalyseeinheiten (18) ausgelöst wird.

10. System nach einem der vorstehenden Ansprüche,
**dadurch gekennzeichnet, dass** das System (12) einen Datenspeicher (24) umfasst, der durch die Verteilungseinheit (16) zugänglich ist, und in dem die Informationen über den Analysestatus (S) und/oder der Analysestatus (S) gespeichert sind.

11. System nach Anspruch 10, **dadurch gekennzeichnet, dass** das System (12) eine Datenspeicherungsbereinigungseinheit (22) umfasst, die konfiguriert ist, um Informationen über den Analysestatus (S) und/oder den Analysestatus (S) in dem Datenspeicher (24) basierend auf einer Benutzereingabe, einer vordefinierten Eigenschaft der Informationen über den Analysestatus (S), einer vordefinierten Eigenschaft des Analysestatus (S) und/oder einer vordefinierten Zeit, insbesondere einer vordefinierten Zeit hinsichtlich des Zeitstempels, zu löschen.

12. System nach einem der vorstehenden Ansprüche,
**dadurch gekennzeichnet, dass** das System (12) eine Netzwerkschnittstelle (14) umfasst, die mit der Verteilungseinheit (16) verbunden ist.

13. Verfahren zum Analysieren von Datenverkehr unter Verwendung eines Systems (12) zum Analysieren von Datenverkehr, insbesondere eines Systems (12) nach einem der vorstehenden Ansprüche, umfassend die folgenden Schritte:
a) Analysieren von Daten unter Verwendung einer Deep-Packet-Inspection-Technik durch eine von mindestens zwei Datenanalyseeinheiten (18) des Systems (12),
b) Ubertragen eines Analysestatus (S) der Datenanalyse von einer der Datenanalyseeinheiten (18) an eine Verteilungseinheit (16) des Systems (12) über einen Dateneingang (28) der Datenanalyseeinheit (18),
c) Speichern von Informationen über den Analysestatus (S) und/oder dem Analysestatus (S), der durch die Verteilungseinheit (16) von einer der Datenanalyseeinheiten (18) empfangen wird, und
d) Senden der gespeicherten Informationen über den Analysestatus (S) und/oder des gespeicherten Analysestatus (S) von der Verteilungseinheit (16) an eine der Datenanalyseeinheiten (18), wobei die Verteilungseinheit (16) Datenanalysearbeiten zwischen den Datenanalyseeinheiten (18) durch Versehen einer der Datenanalyseeinheiten (18) mit dem neuesten gespeicherten Analysestatus (S), der von einer der Datenanalyseeinheiten (18) empfangen wird, neu verteilt, ohne den Status der Analyse und beliebiger zuvor ausgeführter Analysearbeiten zu verlieren.

14. Verfahren nach Anspruch 13, wobei die jeweilige Datenanalyseeinheit (18) die Informationen über den Analysestatus (S) und/oder den Analysestatus (S), der durch die Verteilungseinheit (16) gesendet wird, empfängt und basierend auf den Informationen über den Analysestatus (S) und/oder dem gespeicherten Analysestatus (S), der von der Verteilungseinheit (16) empfangen wird, eine Datenanalyse durchführt, wobei insbesondere die Datenanalyse basierend auf den Informationen über den Analysestatus (S) und/oder dem gespeicherten Analysestatus (S), der von der Verteilungseinheit (16) empfangen wird, fortgesetzt wird.

15. Verfahren nach Anspruch 13 oder 14, wobei die Verteilungseinheit Datenpakete (P) eines zu analysierenden Datenverkehrs, insbesondere IP-Pakete eines zu analysierenden IP-Datenverkehrs, an die Datenanalyseeinheiten (18) verteilt, insbesondere wobei die Verteilungseinheit (16) ein zu analysierendes Datenpaket (P) zusammen mit den gespeicherten Informationen über den Analysestatus (S) und/oder dem gespeicherten Analysestatus (S) bezüglich des Datenpakets (P) an eine der Datenanalyseeinheiten (18) sendet.

## Revendications

1. Système d'analyse de trafic de données comprenant au moins deux unités d'analyse de données (18) et une unité de distribution (16),
chacune des unités d'analyse de données (18) comprenant une entrée de données (28) et une sortie de résultats (30),
chacune des unités d'analyse de données (18) étant connectée par l'intermédiaire de son entrée de données (28) respective à l'unité de distribution (16), et les unités d'analyse de données (18) étant configurées pour réaliser une analyse de données à l'aide d'une technique d'inspection approfondie des paquets,
dans lequel les unités d'analyse de données (18) sont configurées pour transmettre et recevoir un statut d'analyse (S) d'analyse de données vers et depuis l'unité de distribution (16), respectivement,
dans lequel l'unité de distribution (16) est configurée pour stocker des informations concernant le statut d'analyse (S) et/ou le statut d'analyse (S) reçu de l'une des unités d'analyse de données (18) ainsi que pour envoyer les informations stockées concernant le statut d'analyse (S) et/ou le statut d'analyse (S) stocké à l'une des unités d'analyse de données (18), et
dans lequel l'unité de distribution (16) est en outre configurée pour redistribuer le travail d'analyse de données entre les unités d'analyse de données (18) sans perdre l'état de l'analyse et un quelconque travail d'analyse précédemment réalisé en fournissant à l'une des unités d'analyse de données (18) le dernier statut d'analyse (S) stocké reçu de l'une des unités d'analyse de données (18).

2. Système selon la revendication 1, **caractérisé en ce que** le statut d'analyse (S) comprend l'état de l'analyse, le statut de parties des données, en particulier de parties du paquet de données, et/ou un horodatage du dernier changement du statut d'analyse (S).

3. Système selon la revendication 1 ou 2, **caractérisé en ce que** l'unité de distribution (16) est configurée pour envoyer les informations stockées concernant le statut d'analyse (S) et/ou le statut d'analyse (S) stocké reçu de l'une des unités d'analyse de données (18) à la même unité des unités d'analyse de données (18) et/ou à une unité différente des unités d'analyse de données (18).

4. Système selon l'une quelconque des revendications précédentes, **caractérisé en ce que** chacune des unités d'analyse de données (18) est configurée pour réaliser une analyse de données en fonction des informations concernant le statut d'analyse (S) et/ou le statut d'analyse (S) stocké reçus de l'unité de distribution (16), en particulier pour reprendre l'analyse de données en fonction des informations concernant le statut d'analyse (S) et/ou le statut d'analyse (S) stocké reçus de l'unité de distribution (16).

5. Système selon l'une quelconque des revendications précédentes, **caractérisé en ce que** l'unité de distribution (16) est configurée pour distribuer des paquets de données (P) du trafic de données à analyser, en particulier des paquets IP du trafic de données IP à analyser, aux unités d'analyse de données (18), en particulier dans lequel le statut d'analyse (S) comprend des informations concernant le paquet de données (P) étant analysé par l'unité d'analyse de données (18) respective.

6. Système selon la revendication 5, **caractérisé en ce que** l'unité de distribution (16) est configurée pour envoyer à l'une des unités d'analyse de données (18) un paquet de données (P) à analyser conjointement avec les informations stockées concernant le statut d'analyse (S) et/ou le statut d'analyse (S) stocké à l'une des unités d'analyse de données (18), en particulier le paquet de données (P) envoyé étant le paquet de données (P) identifié dans le statut d'analyse (S).

7. Système selon l'une quelconque des revendications précédentes, **caractérisé en ce que** le système (12) comprend une unité de résultats (20) connectée à la sortie de résultats (30) de chacune des unités d'analyse de données (18) et configurée pour recevoir les résultats d'analyse (R) de l'analyse de données, en particulier dans lequel l'unité de résultats (20) comprend un module d'interface utilisateur (32) pour présenter les résultats d'analyse (R).

8. Système selon l'une quelconque des revendications précédentes, **caractérisé en ce que** l'unité de distribution (16) est un serveur pour les unités d'analyse de données (18) et les unités d'analyse de données (18) sont des clients de l'unité de distribution (16).

9. Système selon l'une quelconque des revendications précédentes, **caractérisé en ce que** l'unité de distribution (16) est configurée pour générer de nouvelles unités d'analyse de données (18) et/ou pour mettre fin à des unités d'analyse de données (18) existantes, en particulier dans lequel la génération et/ou la fin d'une unité d'analyse de données (18) est déclenchée par une entrée d'utilisateur et/ou des données de charge provenant d'unités d'analyse de données (18) existantes.

10. Système selon l'une quelconque des revendications précédentes, **caractérisé en ce que** le système (12) comprend un stockage de données (24) accessible par l'unité de distribution (16) et dans lequel les informations concernant le statut d'analyse (S) et/ou le statut d'analyse (S) sont stockées.

11. Système selon la revendication 10, **caractérisé en ce que** le système (12) comprend une unité de nettoyage de stockage de données (22) étant configurée pour supprimer des informations concernant le statut d'analyse (S) et/ou le statut d'analyse (S) dans le stockage de données (24) en fonction d'une entrée d'utilisateur, d'une caractéristique prédéfinie des informations concernant le statut d'analyse (S), d'une caractéristique prédéfinie du statut d'analyse (S) et/ou d'un temps prédéfini, en particulier d'un temps prédéfini par rapport à l'horodatage.

12. Système selon l'une quelconque des revendications précédentes, **caractérisé en ce que** le système (12) comprend une interface réseau (14) étant connectée à l'unité de distribution (16).

13. Procédé d'analyse de trafic de données à l'aide d'un système (12) d'analyse de trafic de données, en particulier un système (12) selon l'une quelconque des revendications précédentes, comprenant les étapes suivantes :
a) analyse de données à l'aide d'une technique d'inspection approfondie des paquets par l'une d'au moins deux unités d'analyse de données (18) du système (12),
b) transmission d'un statut d'analyse (S) d'analyse de données de l'une des unités d'analyse de données (18) à une unité de distribution (16) du système (12) par l'intermédiaire d'une entrée de données (28) de l'unité d'analyse de données (18),
c) stockage d'informations concernant le statut d'analyse (S) et/ou le statut d'analyse (S) reçu de l'une des unités d'analyse de données (18) par l'unité de distribution (16), et
d) envoi des informations stockées concernant le statut d'analyse (S) et/ou le statut d'analyse (S) stocké de l'unité de distribution (16) à l'une des unités d'analyse de données (18), dans lequel l'unité de distribution (16) redistribue un travail d'analyse de données entre les unités d'analyse de données (18) sans perdre l'état de l'analyse et un quelconque travail d'analyse précédemment réalisé en fournissant à l'une des unités d'analyse de données (18) le dernier statut d'analyse (S) stocké reçu de l'une des unités d'analyse de données (18).

14. Procédé selon la revendication 13, dans lequel l'unité d'analyse de données (18) reçoit les informations concernant le statut d'analyse (S) et/ou le statut d'analyse (S) envoyées par l'unité de distribution (16) et réalise une analyse des données en fonction des informations concernant le statut d'analyse (S) et/ou le statut d'analyse (S) stocké reçus de l'unité de distribution (16), en particulier en reprenant l'analyse de données en fonction des informations concernant le statut d'analyse (S) et/ou le statut d'analyse (S) stocké reçus de l'unité de distribution (16).

15. Procédé selon la revendication 13 ou 14, dans lequel l'unité de distribution distribue des paquets de données (P) de trafic de données à analyser, en particulier des paquets IP de trafic de données IP à analyser, aux unités d'analyse de données (18), en particulier dans lequel l'unité de distribution (16) envoie à l'une des unités d'analyse de données (18) un paquet de données (P) à analyser conjointement avec les informations stockées concernant le statut d'analyse (S) et/ou le statut d'analyse (S) stocké lié au paquet de données (P).
